# EUROPÄISCHE PATENTANMELDUNG

(11) **EP 0 602 392 A1**
(43) Veröffentlichungstag der Anmeldung: **22.06.1994**
(21) Anmeldenummer: 93118330.5
(22) Anmeldetag: 12.11.1993
(51) Int. Cl.: F16M 11/24

(54) **Vorrichtung zum höheneinstellbaren Tragen von Gegenständen**

(30) Priorität: 18.12.1992 DE 9217224 U; 11.03.1993 DE 4307714
(71) Anmelder: Wella Aktiengesellschaft, D-64274 Darmstadt (DE)
(72) Erfinder: Balzer, Gerhard, D-36169 Rasdorf (DE); Krönung, Karl, D-36145 Hofbieber (DE); Noll, Erwin, D-36088 Hünfeld (DE)

(57) **Zusammenfassung**

Säulenartige Vorrichtung 1, 1A mit einer Höheneinstelleinrichtung 30 für Tragelemente 3, 4, 12 - 15, wobei die Höheneinstelleinrichtung 30 mindestens eine Höheneinstellbahn 2, 2A, 2B zum Verbinden mindestens eines Tragelements 3, 4, 12 - 15 aufweist, wobei erfindungsgemäß die Höheneinstellbahn 2, 2A, 2B als eine Gewindebohrungsschiene 5, 5A - 5C ausgestaltet ist, die in Abständen X Gewindebohrungen 6 aufweist zum wahlweisen Befestigen mindestens eines Tragelements 3, 4, 12 - 15.

## Beschreibung

Die Erfindung betrifft eine Vorrichtung nach dem Oberbegriff des Anspruchs 1.

Eine derartige Vorrichtung ist aus der DE-A 39 37 518 bekannt. Hierbei sind stufenlos höhenverstellbare Tragelemente vorgesehen, die mit einem in einer T-Nut verschiebbar gelagertem Befestigungselement verbunden sind. Hierbei kann es passieren, daß schon beim Anlösen der Tragelementverbindung diese unbeabsichtigt nach unten - entlang der Nut - fallen kann und damit eine Gefahr für Mensch und Material bedeutet.

Es ist daher Aufgabe der Erfindung, eine gattungsgleiche Vorrichtung zu schaffen, die die oben genannte Gefahr verhindert.

Gelöst ist diese Aufgabe nach dem kennzeichnenden Teil des Anspruchs 1. Weitere vorteilhafte Weiterbildungen/Ausgestaltungen der Erfindung gehen aus den Unteransprüchen hervor.

Anhand von zwei Ausführungsbeispielen mit 12 Figuren wird die Erfindung näher beschrieben.

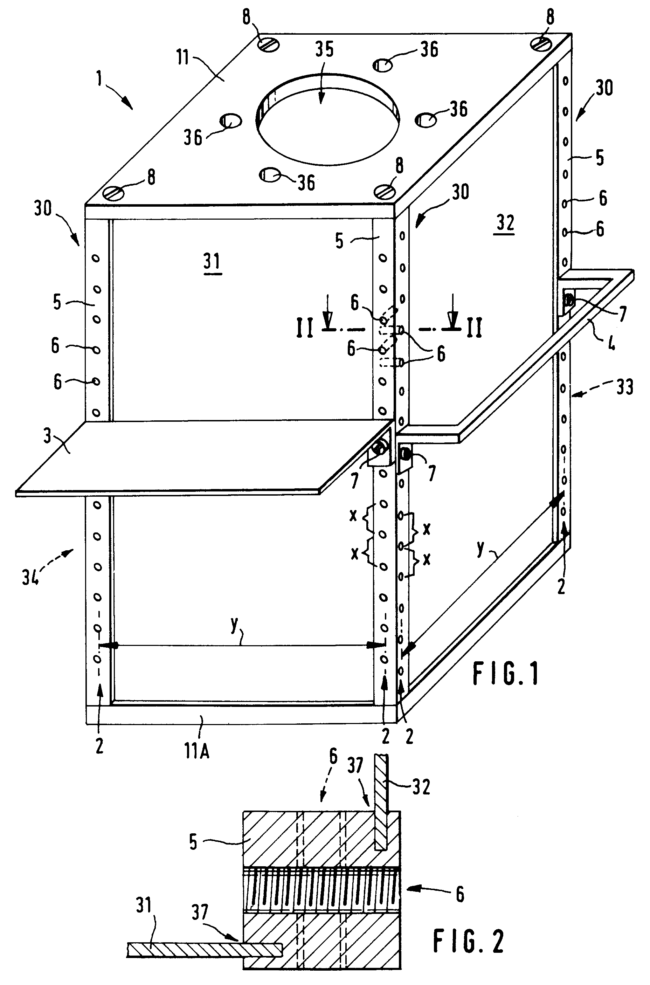

In der Fig. 1 ist eine säulenartige Vorrichtung 1 mit einer Höheneinstelleinrichtung 30 für Tragelemente 3, 4 zum höhenverstellbaren Tragen von Gegenständen dargestellt, wobei als Höheneinstelleinrichtung 30 vier Höheneinstellbahnen 2 zum Verbinden von Tragelementen 3, 4 vorgesehen sind.

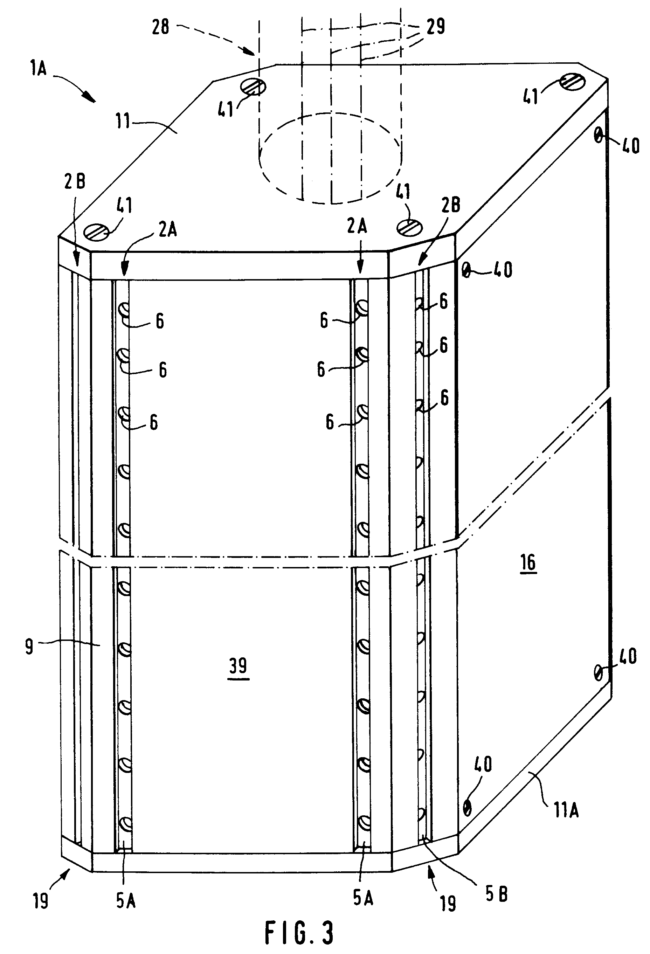

Als Höheneinstellbahn 2 ist eine Gewindebohrungsschiene 5 vorgesehen, wobei in gleichen Abständen X Gewindebohrungen 6 angeordnet sind zum wahlweisen Befestigen von Tragelementen 3, 4 mittels Schrauben 7. Dadurch ist eine Höheneinstellung von Tragelementen 3, 4 in durch den Abstand X vorgegebenen Stufen möglich. Die Vorrichtung 1 weist vier Seitenwände 31 ... 34 auf, die mit den Gewindebohrungsschienen 5 verbunden sind. Weiter sind die Schienen 5 über eine Schraubverbindung 8 mit einer Deckplatte 11 und einer Bodenplatte 11A verbunden. Die Deckplatte 11 oder Bodenplatte 11A kann für Versorgungsleitungen 29 (Fig. 3!) mit einer Öffnung 35 versehen werden. Zum Anflanschen an ein (ortsveränderbares) Stativ 28 (Fig. 3!) sind radial um die Öffnung 35 verteilte Bohrungen 36 vorgesehen.

Als Abstand X der Gewindebohrungen 6 kann ein gleichmäßiges Rastermaß oder individuell vorgegebene Abstände X vorgesehen werden. Es können aber auch für ein anderes gewünschtes Abstandsmaß X die Gewindebohrungsschienen 5 entsprechend ausgewechselt werden. Durch ein einheitliches Abstandsmaß Y der Höheneinstellbahnen 2 lassen sich die Tragelemente 3, 4 wahlweise an allen vier Seitenwänden 31 ... 34 anordnen.

In der Fig. 2 ist in einer Ausschnittsvergrößerung nach Schnitt II-II die Gewindebohrungsschiene 5 mit den um jeweils 90 Grad verdrehten Gewindebohrungen 6 dargestellt. Die Seitenwände 31, 32 sind in Nuten 37 lösbar mit der Schiene 5 verbunden. Der Zusammenhalt der Verbindungen Schienen 5/Seitenwände 31 ... 34 ist durch die Deck- und Bodenplatte 11, 11A gegeben.

Fig. 3 zeigt in einer perspektivischen Darstellung eine Vorrichtung 1A, die mit zwei Profilstrangteilen 9 versehen ist. Ein Profilstrangteil 9 weist zwei Kantenbereiche 19 und eine dazwischenliegende Seitenwand 39 auf. Die Teile 9 sind mit Seitenwänden 16 im Kantenbereich 19 mit Schrauben 40 verbunden. Zusätzlich können die Seitenwände 16 mit einer Verkleidungswand 17 versehen werden. Die Teile 9 mit den Seitenwänden 16 sind oberseitig mit einer Deckplatte 11 und unterseitig mit einer Bodenplatte 11A mittels Schrauben 41 verbunden. Ein wahlweise mit der Vorrichtung 1A verbundenes Stativ 28 ist gestrichtelt angedeutet, ebenso in die Vorrichtung 1A führende Versorgungsleitungen 29 für beispielsweise Gas, Stromversorgung und Signale. Es kann ein ortsfestes oder ortsveränderbares Stativ 28 vorgesehen werden. Die Profilstrangteile 9 sind mit Höheneinstellbahnen 2A versehen, in denen jeweils eine Gewindebohrungsschiene 5A angeordnet ist. Außerdem sind in den Kantenbereichen 19 weitere Höheneinstellbahnen 2B vorgesehen, die mit Gewindebohrungsschienen 5B versehen sind.

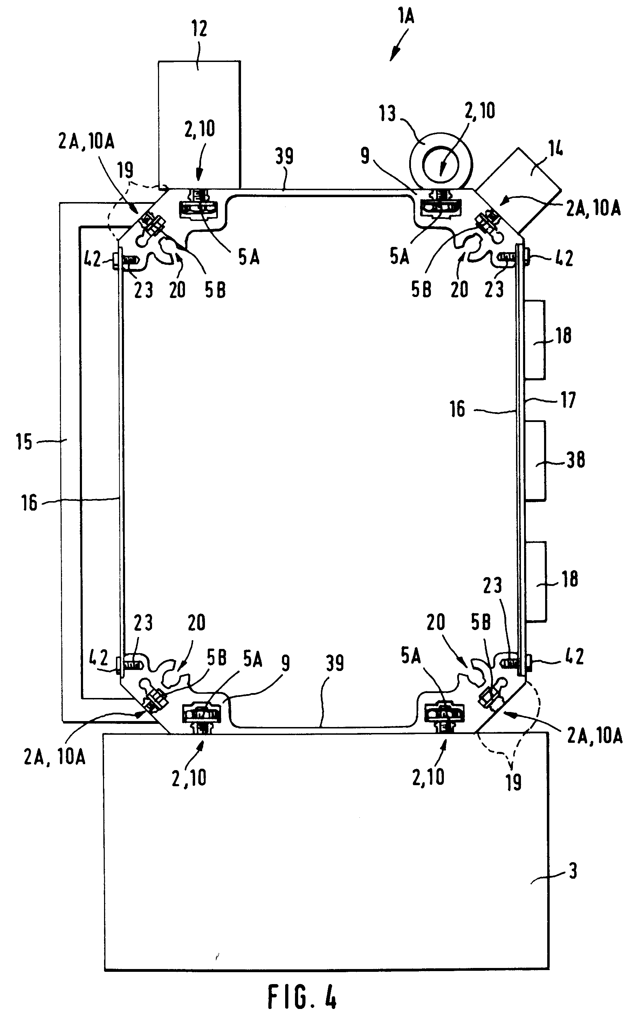

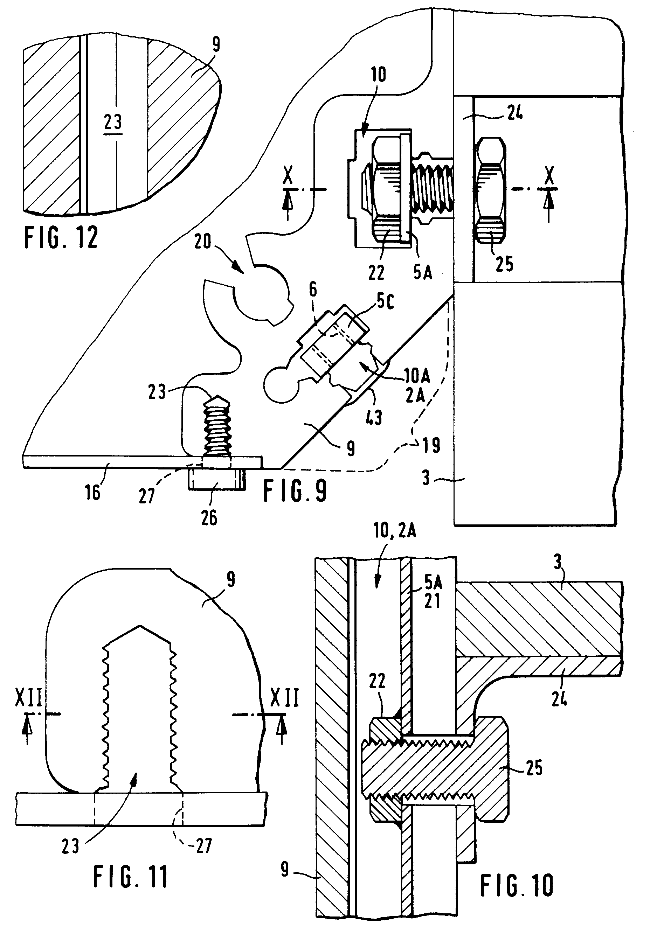

Fig. 4 zeigt eine Draufsicht auf die Vorrichtung 1A nach der Fig. 3 mit abgenommener Deckplatte 11. Die Nuten 10 sind als T-Profil ausgestaltet, wodurch Gewindebohrungsschienen 5A austauschbar in die Nuten 10 eingeschoben werden können. Weitere T-Profilnuten 10A sind im Kantenbereich 19 des Profilstrangteils 9 angeordnet, die auch entsprechende Gewindebohrungsschienen 5B aufnehmen können. Dadurch können unabhängig von den Höheneinstellbahnen 2 weitere Tragelemente 14, 15 entlang der Höheneinstellbahnen 2A verbunden werden. Zum lösbaren Befestigen der Seitenwände 16 mit den Profilstrangteilen 9 mittels Schrauben 42 sind entsprechende Gewindeprofilnuten 23 vorgesehen (Näheres geht aus den Fig. 9, 11 und 12 hervor). Die Vorrichtung 1A kann mit verschiedenen Tragelementen 3, 12, 13, 14, 15 verbunden werden, wie zum Beispiel in Form einer Halteschiene 15 oder eines Flaschenhalters 13.

Außerdem können die Seitenwände 16, 17 mit Versorgungsanschlüssen 18 und Kontrolleinrichtungen 38 versehen werden. Im Kantenbereich 19 ist in einem Winkel von 45 Grad eine weitere Höheneinstellbahn 2A angeordnet. Zum Befestigen der Deckplatte 11 und einer Bodenplatte 11A ist das Profilstrangteil 9 mit einer Rinne 20 versehen für eine Gewindebohrung zum Befestigen der Deck- und Bodenplatte 11, 11A mittels der Schrauben 41. Es kann vorgesehen werden, die mit den Profilstrangteilen 9 integrierten Seitenwände 39 auch separat auszubilden wie die Seitenwände 16, wodurch das Gesamtbreitenmaß individuell vorgegeben werden kann.

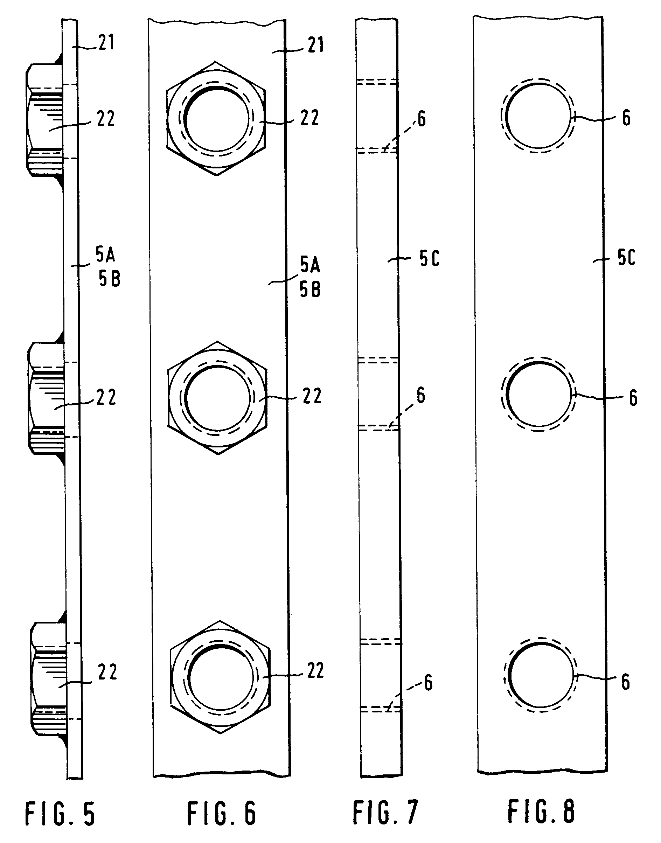

In den Fig. 5 und 6 ist eine Gewindebohrungssschiene 5A, 5B dargestellt, die aus einer Lochschiene 21 besteht, an der entsprechende Muttern 22 unlösbar befestigt sind.

In den Fig. 7 und 8 ist eine Gewindebohrungsschiene 5c dargestellt, die mit Gewindebohrungen 6 versehen ist und wahlweise als Schienen 5A, 5B vorgesehen werden können.

Fig. 9 zeigt in einer Ausschnittsdarstellung von unten den Kantenbereich 19 des Profilstrangteils 9. Hierbei ist das Tragelement (Platte) 3 über einen Tragwinkel 24 mittels einer Sechskantschraube 25 mit der Gewindebohrungsschiene 5A verbunden. Zum Befestigen von Seitenwänden 16, 17 mittels Schrauben 26 sind Gewindeprofilnuten 23 vorgesehen, wodurch sich ein individuelles Gewindebohren erübrigt, da die Schrauben 26 an jeder Position in die Gewindeprofilnut 23 hineingedreht werden können. So muß pro Befestigungspunkt nur eine Bohrung 27 pro Schraube 26 an der Seitenwand 16, 17 vorgesehen werden. Damit ist eine sehr einfache und vielseitige Verbindungsmöglichkeit gegeben, die vorteilhaft auch selbständig realisiert werden kann in vielen anderen technischen Bereichen, wo es um eine einfache und wieder lösbare Verbindung geht.

Fig. 10 ist eine Seitenansicht nach der Fig. 9 im Schnitt X-X.

Die Fig. 11 und 12 zeigen im Detail die Gewindeprofilnut 23.

Zum Abdecken nicht benutzter Strecken der Höheneinstellbahnen 2, 2A, 2B können diese mit einer Abdeckschiene 43 (Fig. 9) versehen werden, womit Staubnester vermieden werden und damit eine bessere Reinigung der Vorrichtung 1, 1A möglich ist. Die Abdeckschiene 43 besteht bevorzugt aus Kunststoff und ist mit der Bahn 2, 2A, 2B klemmend verbunden.

Vorteilhafterweise besteht das Profilmaterial 9 aus Aluminium und die Gewindebohrungsschienen 5A, 5B, 5C aus Stahl.

## Patentansprüche

1. Säulenartige Vorrichtung mit einer Höheneinstelleinrichtung für Tragelemente, wobei die Höheneinstelleinrichtung mindestens eine Höheneinstellbahn zum Verbinden mindestens eines Tragelements aufweist, **dadurch gekennzeichnet,**
daß die Höheneinstellbahn (2, 2A, 2B) als eine Gewindebohrungsschiene (5, 5A - 5C) ausgestaltet ist, die in Abständen (X) Gewindebohrungen (6) aufweist zum wahlweisen Befestigen mindestens eines Tragelements (3, 4, 12 - 15).

2. Vorrichtung nach Anspruch 1, **dadurch gekennzeichnet,** daß die Gewindebohrungsschiene (5, 5A - 5C) innerhalb einer Nut (10) angeordnet ist.

3. Vorrichtung nach Anspruch 2, **dadurch gekennzeichnet,** daß die Nut (10) T-förmig ausgestaltet ist.

4. Vorrichtung nach Anspruch 1, **dadurch gekennzeichnet,** daß die Gewindebohrungsschiene (5A, 5B) aus einer Lochschiene (21) besteht, an der einseitig entsprechende Muttern (22) unlösbar verbunden sind.

5. Vorrichtung nach Anspruch 4, **dadurch gekennzeichnet,** daß die Muttern (22) angeschweißt sind.

6. Vorrichtung nach mindestens Anspruch 1, **dadurch gekennzeichnet,** daß mindestens eine Seite der Vorrichtung (1A) aus Profilmaterial (9) besteht.

7. Vorrichtung nach Anspruch 6, **dadurch gekennzeichnet,** daß das Profilmaterial (9) mit mindestens einer Nut (10) versehen ist.

8. Vorrichtung nach Anspruch 6, **dadurch gekennzeichnet,** daß das Profilmaterial (9) mit mindestens einer Gewindeprofilnut (23) versehen ist.

9. Vorrichtung nach mindestens Anspruch 1, **dadurch gekennzeichnet,** daß die Vorrichtung 1, 1A einen rechteckigen Querschnitt aufweist.

10. Vorrichtung nach mindestens Anspruch 9, **dadurch gekennzeichnet,** daß der Kantenbereich (19) mit einer weiteren Höheneinstellbahn (2A) versehen ist.

11. Vorrichtung nach mindestens einem der vorgenannten Ansprüche, **dadurch gekennzeichnet,** daß die Vorrichtung (1, 1A) mit einem Stativ (28) für eine dreidimensionale Ortsveränderung oder ortsfest verbunden ist.

12. Vorrichtung nach Anspruch 11, **dadurch gekennzeichnet,** daß die Vorrichtung (1, 1A) mit Versorgungsleitungen 29 verbunden ist.

13. Vorrichtung nach Anspruch 11 und 12, **dadurch gekennzeichnet,** daß die Vorrichtung (1, 1A) als eine medizintechnische Vorrichtung vorgesehen ist.

14. Vorrichtung nach mindestens Anspruch 1, **dadurch gekennzeichnet,** daß die Gewindebohrungsschiene (5, 5A - 5C) lösbar mit der Höheneinstelleinrichtung (30) verbunden ist.

15. Vorrichtung nach mindestens Anspruch 1, **dadurch gekennzeichnet,** daß die Gewindebohrungen (6) in gleichen Abständen (X) angeordnet sind.

16. Vorrichtung nach mindestens Anspruch 1, **dadurch gekennzeichnet,** daß die Gewindebohrungen (6) individuell vorgegebene Abstände (X) aufweisen.

17. Vorrichtung nach mindestens einem der vorgenannten Ansprüche, **dadurch gekennzeichnet,** daß zum Abdecken nicht benutzter Strecken der Höheneinstellbahnen 2, 2A, 2B eine Abdeckschiene 43 vorgesehen ist.
